# EUROPÄISCHE PATENTSCHRIFT

(11) **EP 3 711 925 B1**
(45) Veröffentlichungstag und Bekanntmachung des Hinweises auf die Patenterteilung: **22.12.2021**
(21) Anmeldenummer: 20163559.6
(22) Anmeldetag: 17.03.2020
(51) Int. Cl.: B29C 49/42, B29C 49/78, B29C 49/06, B29K 67/00, B29L 31/00

(54) **BLASFORMMASCHINE MIT DOPPELRÜCKSCHLAGVENTIL**
BLOW MOULDING MACHINE WITH DUAL CHECK VALVE
MACHINE DE MOULAGE PAR SOUFFLAGE POURVU DE DOUBLE CLAPET ANTI-RETOUR

(30) Priorität: 19.03.2019 DE 102019107013
(43) Veröffentlichungstag der Anmeldung: 23.09.2020
(73) Patentinhaber: Krones AG, 93073 Neutraubling (DE)
(72) Erfinder: Höllriegl, Thomas, 93073 Neutraubling (DE); Hengl, Benedikt, 93073 Neutraubling (DE); Senn, Konrad, 93073 Neutraubling (DE); Buess, Armin, 93073 Neutraubling (DE)
(74) Vertreter: Bittner, Bernhard

(56) Entgegenhaltungen:
- EP-A2- 0 838 596
- DE-A1-102017 114 138
- US-A- 3 312 445
- US-A1- 2008 128 958

## Beschreibung

Die vorliegende Erfindung bezieht sich auf eine Vorrichtung und ein Verfahren zum Umformen von Kunststoffvorformlingen zu Kunststoffbehältnissen. Derartige Vorrichtungen und Verfahren sind aus dem Stand der Technik seit Langem bekannt.

Dabei ist es bekannt, dass Kunststoffvorformlinge besonders bevorzugt mit einem gasförmigen Medium, wie etwa mit Druckluft beaufschlagt werden und so zu Kunststoffflaschen expandiert werden. In jüngerer Zeit sind auch Vorrichtungen und Verfahren bekannt geworden, bei denen die Kunststoffvorformlinge mit Flüssigkeit und insbesondere mit einem abzufüllenden Getränk beaufschlagt werden.

Die vorliegende Erfindung bezieht sich auf beide Arten von Vorrichtungen. Im Stand der Technik ist es üblich, dass während des Umformungsprozesses die Kunststoffvorformlinge mit unterschiedlichen Druckstufen beaufschlagt werden. So können die Vorformlinge beispielsweise zunächst mit einem Vorblasdruck beaufschlagt werden, anschließend mit einem höheren zweiten Blasdruck (z. B. dem sog. Zwischenblasdruck) und schließlich auch noch mit einem nochmals höheren Fertigblasdruck.

Hierfür werden üblicherweise mehrere Ventile geschaltet. Zunächst wird ein Ventil für den Vorblasdruck geöffnet, anschließend dieses wieder geschlossen, im Anschluss wird ein weiteres Ventil für einen Zwischenblasdruck geöffnet und wieder geschlossen und schließlich ein Ventil für einen Fertigblasdruck geöffnet.

Nach der Expansion der Kunststoffvorformlinge können diese Ventile wieder in umgekehrter Reihenfolge entsprechend geschaltet werden.

Durch die jeweiligen Schaltprozesse kommt es zu geringen zeitlichen Verzögerungen, welche sich auf die Herstellung der Kunststoffbehältnisse negativ auswirken können. Entsprechend ist aus der DE 21 2006 000 106 U1 eine Vorrichtung bekannt, bei denen die Ventile zwar geöffnet werden, jedoch sich automatisch durch zusätzliche Rückschlagventile wieder schließen. Ähnliche Vorrichtungen und Verfahren mit zusätzlichen Rückschlagventilen bzw. mit Ventilen, die sich auch wieder automatisch schließen, sind auch in den Druckschriften US 2008/0128958 A1, US 3,312,445 A und DE 10 2017 114138 A1 offenbart. Auf diese Weise können die Schaltzeiten insgesamt für den Prozess verringert werden.

Dabei wird in dieser Druckschrift DE 21 2006 000 106 U1 die Verwendung zweier getrennter Rückschlagventile vorgeschlagen, was die Anordnung relativ aufwendig macht.

Der vorliegenden Erfindung liegt daher die Aufgabe zugrunde, eine Vorrichtung zum Umformen von Kunststoffvorformlingen zu Kunststoffbehältnissen vorzuschlagen, welche insbesondere mit geringerem Aufwand realisierbar ist. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Umformungsstation auf, welche eine Blasformanordnung aufweist, innerhalb derer Kunststoffvorformlinge durch Beaufschlagung mit einem fließfähigen Medium zu Kunststoffbehältnissen umformbar sind. Weiterhin weist die Vorrichtung eine Beaufschlagungseinrichtung auf, welche dazu geeignet und bestimmt ist, die Kunststoffvorformlinge mit einem fließfähigen Medium zu beaufschlagen, sowie eine Ventilanordnung mit wenigstens zwei Ventileinrichtungen, welche dazu geeignet und bestimmt sind, den Kunststoffvorformling während dessen Umformung das fließfähige Medium unter wenigstens zwei unterschiedlichen Drücken zuzuführen.

Erfindungsgemäß weist wenigstens eine Ventileinrichtung wenigstens einen bezüglich eines Ventilgehäuses zwischen zwei Ventilstellungen bewegbaren Ventilkörper auf und an diesem Ventilkörper ist ein zwischen wenigstens zwei Stellungen bewegbares Rückschlagelement, etwa ein bewegbarer Rückschlagkolben angeordnet. Bevorzugt ist daher dieser Rückschlagkolben gegenüber dem Ventilkörper bewegbar.

Es wird darauf hingewiesen, dass im Folgenden der Begriff Rückschlagkolben für das Rückschlagelement verwendet wird. Dieser Begriff schließt dabei generell solche Elemente ein, welche unter der Einwirkung einer Druckänderung in eine bestimmte Position gedrängt werden und/oder welche dazu geeignet und bestimmt sind, einen Mediendurchfluss wenigstens teilweise und bevorzugt vollständig zu blockieren.

Dabei kann dieses Rückschlagelement die geometrische Gestalt eines Kolbens haben aber auch andere Gestalten, wie etwa die Gestalt einer Kugel, Halbkugel oder dergleichen. Bevorzugt weist die Vorrichtung einen Sitz für das Rückschlagelement auf. Daneben kann das Rückschlagelement auch als rohrförmiger Körper ausgebildet sein, der bevorzugt einerseits zum Leiten des fließfähigen Mediums dient und andererseits zum Verschließen von Abschnitt der Ventileinrichtung.

Es wird damit eine Ventileinrichtung vorgeschlagen, welche einerseits ein schaltbares Ventil darstellt und zusätzlich auch noch die Funktion eines Rückschlagventils wahrnimmt. In einer bevorzugten Ausführungsform können mehrere solcher Ventileinrichtungen annähernd in einer Ebene angeordnet sein, deren Normale (weitestgehend) parallel zur Mittlachse des Kunststoffbehältnisses verläuft.

Wie oben erwähnt, handelt es sich bei dem fließfähigen Medium insbesondere um ein gasförmiges Medium. Besonders bevorzugt ist die Umformungsstation an einem bewegbaren Träger angeordnet und insbesondere an einem drehbaren Träger. Besonders bevorzugt weist die Vorrichtung eine Vielzahl der genannten Umformungsstationen auf, die an dem bewegbaren und insbesondere drehbaren Träger angeordnet sind. Bevorzugt sind alle diese Umformungsstationen in der oben beschriebenen Weise ausgebildet.

Bei einer weiteren vorteilhaften Ausführungsform weist die Beaufschlagungseinrichtung eine Blasdüse auf, die insbesondere an eine Mündung des Kunststoffvorformlings anlegbar ist. Dabei wird diese Blasdüse mit Blasluft versorgt, welche über die oben genannten Ventileinrichtungen geführt wird.

Bei einer weiteren vorteilhaften Ausführungsform weist die wenigstens eine Umformungsstation auch einen stangenartigen Körper und insbesondere eine sogenannte Reckstange auf, die in den Kunststoffvorformling einführbar ist, um diesen in seiner Längsrichtung zu dehnen. Bei einer weiteren vorteilhaften Ausführungsform ist auch die zweite Ventileinrichtung in der oben genannten Weise ausgeführt, das heißt als Ventil, welches eine Rückschlagfunktion aufweist.

Bei einer weiteren vorteilhaften Ausführungsform sind die beiden Kolben, das heißt einerseits der Ventilkolben und andererseits der Rückschlagkolben in der gleichen Bewegungsrichtung bewegbar. Dabei ist es möglich, dass diese beiden Kolben auch rotationssymmetrisch sind und insbesondere rotationssymmetrisch bezüglich der gleichen Symmetrieachse.

Bei einer weiteren vorteilhaften Ausführungsform ist es denkbar, dass der Ventilkolben durch das Ventilgehäuse geführt wird. Weiterhin ist bevorzugt der Rückschlagkolben durch den Ventilkolben geführt.

Bei einer weiteren bevorzugten Ausführungsform ist wenigstens eine erste Dichtungseinrichtung, wie etwa eine Kolbendichtung vorgesehen, der den Ventilkolben gegenüber dem Ventilgehäuse abdichtet. Bei einer weiteren bevorzugten Ausführungsform ist wenigstens eine zweite Dichtungseinrichtung, wie etwa eine Kolbendichtung vorgesehen, welche den Rückschlagkolben gegenüber dem Ventilkolben abdichtet.

Bei einer weiteren vorteilhaften Ausführungsform verläuft daher der Rückschlagkolben wenigstens abschnittsweise innerhalb des Ventilkolbens.

Bei einer bevorzugten Ausführungsform weist die Vorrichtung ein Druckreservoir auf, welches das fließfähige Medium bereitstellt und die Ventileinrichtung ist zwischen diesem Druckreservoir und der Beaufschlagungseinrichtung angeordnet. Dabei kann es sich bei diesem Druckreservoir beispielsweise um einen Ringkanal handeln, der zum Speichern des fließfähigen Mediums geeignet und bestimmt ist.

Vorteilhaft weist die Vorrichtung mehrere derartige Druckreservoirs auf, in denen das fließfähige Medium insbesondere unter unterschiedlichen Drücken gespeichert werden kann. Dabei können mehrere dieser Druckreservoirs mit mehreren dieser oben beschriebenen Ventileinrichtungen verbunden sein. Dabei ist es auch möglich, dass während des Herstellungsverfahrens wieder Druck in diese Ringkanäle und insbesondere in Ringkanäle mit geringerem Druck recycelt wird. Auf diese Weise kann insgesamt Druckluft eingespart werden. Auch zu diesem Zweck können die genannten Ventileinrichtungen eingesetzt werden.

Bei einer weiteren bevorzugten Ausführungsform ist der erste Ventilkolben aktiv schaltbar. Dies bedeutet, dass der Ventilkolben insbesondere zu gewünschten Zeitpunkten geschaltet werden kann bzw. von einer ersten Position in eine zweite Position verschoben werden kann. Dabei kann dieser Ventilkolben beispielsweise pneumatisch schaltbar sein oder auch elektrisch.

Bevorzugt ist der Rückschlagkolben nicht aktiv schaltbar, sondern ein Schalten des Rückschlagkolbens bzw. eine Bewegung des Rückschlagkolbens gegenüber dem Ventilkolben wird durch Druckverhältnisse bewirkt. Bevorzugt kann der Rückschlagkolben allein durch den Einfluss des gasförmigen Mediums bewegt werden.

Bei einer weiteren bevorzugten Ausführungsform kann ein Spannelement, insbesondere ein Federelement und/oder ein Dämpferelement vorgesehen sein, welches den Rückschlagkolben in einer bestimmten Richtung und/oder in eine bestimmte Position (etwa eine mittlere Stellung bezüglich des Ventilkolbens) vorspannt. Auf diese Weise kann ein unkontrolliertes Aufschaukeln und/oder Flattern des Rückschlagkolbens verhindert oder zumindest vermindert werden.

Bevorzugt ist das Rückschlagelement einteilig ausgebildet. Es wäre jedoch auch eine mehrteilige Ausbildung des Rückschlagelements denkbar.

Bei einer weiteren vorteilhaften Ausführungsform bildet die Ventileinrichtung für beide Strömungsrichtungen des fließfähigen Mediums eine Rückschlagventilfunktion aus. Damit ist bevorzugt die Ventileinrichtung als Doppelrückschlagventil ausgebildet.

So ist es möglich, dass diese Doppelrückschlagventilfunktion für die eine Strömungsrichtung sich in einer ersten Ventilstellung des Ventilkolbens und einer bestimmten ersten Stellung des Ventilrückschlagkolbens einstellt und die zweite Rückschlagfunktion für die umgekehrte Strömungsrichtung des fließfähigen Mediums sich in anderen Ventilstellungen des Ventilkolbens und des Rückschlagkolbens einstellt. Bevorzugt gibt es eine Ventilstellung des Ventilkolbens sowie des Rückschlagkolbens, in der das Ventil in der einen Strömungsrichtung sperrt und es gibt eine Ventilstellung des Kolbens sowie des Rückschlagkolbens, in der das Ventil in der anderen Strömungsrichtung des fließfähigen Mediums sperrt.

Bei einer weiteren bevorzugten Ausführungsform weist die Vorrichtung eine Sensoreinrichtung auf, welche eine Stellung des Ventilkolbens und/oder des Rückschlagkolbens erfasst und/oder überwacht. Bevorzugt gibt diese Sensoreinrichtung wenigstens einen Wert aus, der für die Stellung des Ventilkolbens und/oder des Rückschlagkolbens charakteristisch ist.

Auf diese Weise können Aussagen über ein gegenwärtiges und/oder zukünftiges Verhalten der Ventileinrichtung getroffen werden. Insbesondere ist auf diese Weise etwa eine Predictive Maintenance oder auch eine Zustandsüberwachung (Condition Monitoring) möglich.

Die vorliegende Erfindung ist weiterhin auf eine Ventileinrichtung, insbesondere auf eine Vorrichtung der oben beschriebenen Art gerichtet. Dabei weist die Ventileinrichtung wenigstens einen bezüglich eines Ventilgehäuses zwischen zwei Ventilstellungen bewegbaren Ventilkolben auf sowie einen an diesem Ventilkolben zwischen wenigstens zwei Stellungen bewegbaren Rückschlagkolben, wobei in einer Ventilstellung des Ventilkolbens sowie des Rückschlagkolbens die Ventileinrichtung in der einen Strömungsrichtung sperrt und in einer Ventilstellung des Ventilkolbens sowie des Rückschlagkolbens das Ventil in der anderen Strömungsrichtung sperrt. Bevorzugt kann damit die Ventileinrichtung in beiden Strömungsrichtungen als Rückschlagventil dienen.

Bei einer bevorzugten Ausführungsform weist die Ventileinrichtung einen Strömungskanal zum Leiten des fließfähigen Mediums auf, wobei dieser Strömungskanal zwischen dem Rückschlagkolben und der Gehäusewandung verläuft. Bevorzugt ist damit ein Strömungskanal vorgesehen, der das fließfähige Medium um den Rückschlagkolben herumleitet.

Bevorzugt umgibt dieser Kanal den Rückschlagkolben.

Bei einer weiteren bevorzugten Ausführungsform ist der Ventilkolben in einem separaten Ventilkolbenraum angeordnet und mechanisch mit dem Rückschlagkolben verbunden.

Es wird darauf hingewiesen, dass der Rückschlagkolben nicht notwendigerweise als ein Kolben im engeren Sinn ausgeführt sein muss, sondern allgemein als Verschließelement, welches wie ein Rückschlagkolben wirkt.

Bei einer weiteren bevorzugten Ausführungsform ist der Rückschlagkolben als rohrförmiger Körper ausgebildet. Dabei kann die Umfangswandung dieses rohrförmigen Körpers als Verschließelement dienen.

Bei einer weiteren vorteilhaften Ausführungsform weist das Rückschlagkolbenelement ein erstes Verschließelement auf, welches dazu geeignet und bestimmt ist, eine Strömung des fließfähigen Mediums an einer ersten Strömungsrichtung zu blockieren und ein zweites Verschließelement, welches dazu geeignet und bestimmt ist, eine Strömung des fließfähigen Mediums in einer zweiten Strömungsrichtung zu blockieren. Dabei sind bevorzugt diese Strömungsrichtungen einander entgegengesetzt. Bevorzugt sind diese beiden Verschließeinrichtung an dem gemeinsamen Träger angeordnet und damit bevorzugt miteinander (insbesondere starr) gekoppelt.

Bevorzugt ist wenigstens ein Verschließelement an wenigstens einer Zugangsöffnung anlegbar, um diese zu verschließen. Vorteilhaft ist diese Zugangsöffnung in dem Ventilgehäuse ausgebildet.

Bevorzugt ist auch das zweite Verschließelement an einer Öffnung bzw. einer Zugangsöffnung angeordnet. Bevorzugt kann auch diese zweite Öffnung durch dieses Verschließelement verschlossen werden.

Bei einer bevorzugten Ausführungsform ist wenigstens zeitweise eine Bewegung des Rückschlagkolbens an eine Bewegung des Ventilkolbens gekoppelt. Bevorzugt ist wenigstens zeitweise eine Bewegung des Rückschlagkolbens von der Bewegung des Ventilkolbens entkoppelt.

Dies bedeutet, dass wenigstens zeitweise der Rückschlagkolben von einer Bewegung des Ventilkolbens mitgenommen wird. Bevorzugt wird der Rückschlagkolben von der aktiven Bewegung des Ventilkolbens mitgenommen. Bevorzugt bewegt sich der Rückschlagkolben zur Realisierung einer Rückschlagfunktion gegenüber dem Ventilkolben.

Bei einer weiteren bevorzugten Ausführungsform ist der Rückschlagkolben in wenigstens drei und bevorzugt in wenigstens vier Positionen bzw. Stellungen gegenüber dem Ventilgehäuse bewegbar.

Bevorzugt ist der Rückschlagkolben in jeder der Positionen des Ventilkolbens gegenüber dem Gehäuse in zwei unterschiedlichen Stellungen gegenüber dem Ventilkolben positionierbar. Bei diesen Stellungen handelt es sich insbesondere um Stellungen, in denen der Rückschlagkolben fest gegenüber dem Ventilgehäuse verharrt und in denen insbesondere eine bestimmte Funktion der Ventileinrichtung wahrgenommen wird, wie etwa eine Rückschlagfunktion.

Bei einer weiteren bevorzugten Ausführungsform weist der Ventilkolben wenigstens einen Anschlag und bevorzugt wenigstens zwei Anschläge an, an welche sich wenigstens ein Element des Rückschlagkolbens anlegen kann.

Bevorzugt weist der Ventilkolben eine Ausnehmung auf, in welche ein Element des Rückschlagkolbens und insbesondere ein Verschließelement des Rückschlagkolbens eintreten kann. Auf diese Weise kann die Ventileinrichtung platzsparender gebaut werden.

Die vorliegende Erfindung ist weiterhin auf ein Verfahren zum Umformen von Kunststoffvorformlingen zu Kunststoffbehältnissen gerichtet, wobei die Kunststoffvorformlinge mittels einer Beaufschlagungseinrichtung durch Beaufschlagung mit einem fließfähigen Medium zu Kunststoffbehältnissen umgeformt werden, und wobei den Kunststoffvorformlingen mittels wenigstens zweier Ventileinrichtungen das fließfähige Medium unter wenigstens zwei Drücken zugeführt wird.

Erfindungsgemäß weist wenigstens eine Ventileinrichtung wenigstens einen Ventilkolben auf, der bezüglich des Ventilgehäuses zwischen zwei Ventilstellungen bewegt wird und ein an diesem Ventilkolben angeordneter Rückschlagkolben wird zwischen wenigstens zwei Stellungen insbesondere gegenüber dem Ventilkolben bewegt.

Bei einer bevorzugten Ausführungsform sperrt die Ventileinrichtung wenigstens zeitweise den Durchfluss des fließfähigen Mediums in einer ersten Strömungsrichtung und die Ventileinrichtung sperrt wenigstens zeitweise den Durchfluss des fließfähigen Mediums in einer zweiten Strömungsrichtung.

Bevorzugt sind diese beiden Richtungen einander entgegengesetzt.

Bevorzugt sperrt die Ventileinrichtung den Durchfluss des Mediums in der einen Strömungsrichtung während eines Expansionsprozesses des Kunststoffvorformlings und die Ventileinrichtung sperrt den Durchfluss des fließfähigen Mediums in der entgegengesetzten Strömungsrichtung während eines Entlastungsabschnitts des Kunststoffbehältnisses.

Bei einer vorteilhaften Ausführungsform werden zum Expandieren der Kunststoffvorformlinge mehrere der genannten Ventileinrichtungen hintereinander geschalten.

Dabei können die Kunststoffvorformlinge zunächst mit einem ersten Druck beaufschlagt werden. Im Anschluss werden die Kunststoffvorformlinge mit einem höheren Druck beaufschlagt. Zu diesem Zweck wird eine erfindungsgemäße Ventileinrichtung geschaltet bzw. geöffnet.

Dieses Schalten erfolgt dabei bevorzugt aktiv, das heißt insbesondere angetrieben. Zu einem späteren Zeitpunkt wird das Ventil wieder geschlossen, wobei dieses Schalten mit der erfindungsgemäßen Ventileinrichtung bevorzugt passiv erfolgt, das heißt bewirkt durch die Druckverhältnisse, die beim aktiven Schalten eines weiteren Ventils entstehen. Dieser passive Schaltvorgang der Ventileinrichtung erfolgt zeitlich verzögert zum aktiven Schaltvorgang einer weiteren Ventileinrichtung. Daraus ergibt sich eine Zeitverzögerung t1, bei der zeitgleich die beiden Ventileinrichtungen zumindest teilweise geöffnet sind. Diese Schaltlogik kann vorzugsweise bei allen Schaltstufen beim Druckaufbau angewandt werden.

Daneben kann eine entsprechende Schaltlogik beim Entlasten des Behältnisses verwendet werden. Auch hier kann etwa zunächst eine bestimmte Ventileinrichtung, welche zum Schalten eines höheren Drucks verantwortlich ist aktiv geschalten werden, um Druckluft zu recyclen. Anschließend kann eine weitere Ventileinrichtung geschalten und insbesondere diese Ventileinrichtung geöffnet werden. Die erst genannte Ventileinrichtung kann insbesondere passiv durch die Druckverhältnisse geschlossen werden.

Weitere Vorteile und Ausführungsformen ergeben sich aus den beigefügten Zeichnungen.

Darin zeigen:
- Fig. 1: eine schematische Darstellung einer Vorrichtung zum Umformen von Kunststoffvorformlingen zu Kunststoffbehältnissen;
- Fig. 2: eine Darstellung eines Druckkurvenverlaufs;
- Fig. 3: eine Darstellung eines Schaltverlaufs einzelner Ventile;
- Fig. 4: eine schematische Darstellung einer erfindungsgemäßen Ventileinrichtung;
- Fig. 5a - 5d: vier Positionen der in Figur 4 gezeigten Ventileinrichtung;
- Fig. 6: eine schematische Darstellung einer erfindungsgemäßen Ventileinrichtung in einer weiteren Ausführungsform;
- Fig. 7a - 7d: vier Positionen der in Fig. 6 gezeigten Ventileinrichtung;
- Fig. 8: eine schematische Darstellung einer erfindungsgemäßen Ventileinrichtung in einer weiteren Ausführungsform; und
- Fig. 9a - 9d: vier Positionen der in Fig. 8 gezeigten Ventileinrichtung.

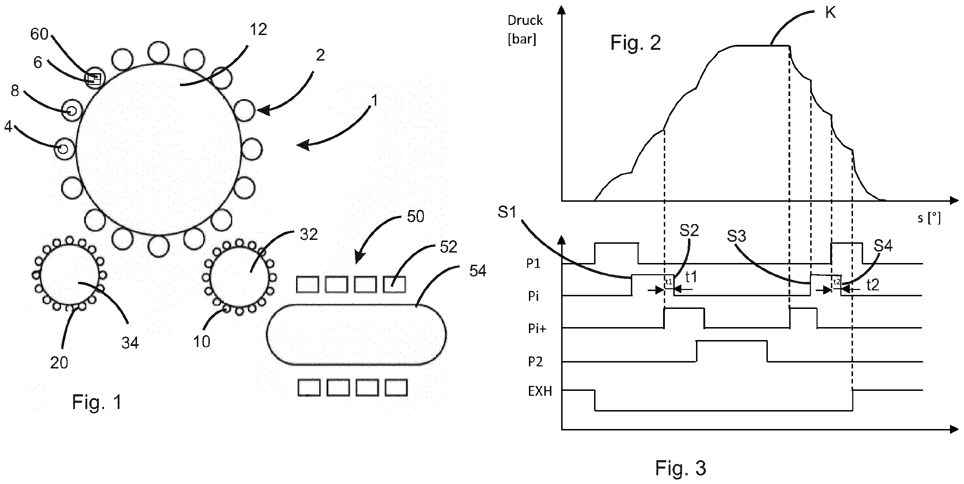

Figur 1 zeigt eine schematische Darstellung einer Vorrichtung 1 zum Umformen von Kunststoffvorformlingen zu Kunststoffbehältnissen. Dabei werden Kunststoffvorformlinge 10 zunächst in einer Heizeinrichtung 50 erwärmt. Zu diesem Zweck weist die Heizeinrichtung 50 eine Vielzahl von Heizelementen 52 auf, die stationär angeordnet sind, sowie eine Transporteinrichtung 54, welche die Kunststoffvorformlinge vereinzelt an den Heizeinrichtungen vorbei transportiert, um diese so zu erwärmen.

An diese Heizeinrichtung 50 schließt sich eine Transporteinrichtung 32 an. Bei dieser Transporteinrichtung handelt es sich insbesondere um einen Transportstern Diese Transporteinrichtung 32 transportiert die Kunststoffvorformlinge 10 zu der eigentlichen Umformungseinrichtung 1.

Das Bezugszeichen 34 kennzeichnet eine weitere Transporteinrichtung, welche die ausgeformten Behältnisse von der Umformungseinrichtung 1 abtransportiert.

Die Umformungseinrichtung 1 weist einen drehbaren Träger 12 auf, an dem eine Vielzahl von Umformungsstationen 2 angeordnet sind. Diese Umformungsstationen 2 sind im Wesentlichen gleichartig ausgestaltet.

Jede dieser Umformungsstationen 2 weist eine (nur schematisch dargestellte) Beaufschlagungseinrichtung 8, wie etwa eine Blasdüse auf, die an eine Mündung der Kunststoffvorformlinge anlegbar ist, um diese so mit einem fließfähigen Medium und insbesondere mit Druckluft zu beaufschlagen.

Das Bezugszeichen 4 kennzeichnet eine Blasformanordnung, innerhalb derer die Kunststoffvorformlinge zu den Kunststoffbehältnissen expandiert werden. Bevorzugt ist diese Blasformanordnung mehrteilig aufgebaut und weist insbesondere wenigstens zwei Teile und ein Bodenteil auf, die bezüglich einander zum Öffnen und Schließen bewegt werden.

Daneben weist noch jede Umformungsstation eine Ventilanordnung 6 auf, beispielsweise einen sogenannten Ventilblock, der eine Vielzahl von Ventileinrichtungen 60 aufweist.

Figur 2 zeigt einen typischen Druckkurvenverlauf beim Expandieren der Kunststoffvorformlinge nach dem Stand der Technik. Man erkennt, dass die Kunststoffvorformlinge mit aufsteigenden Drücken beaufschlagt werden. Anschließend werden die Drücke wieder separat abgebaut und teilweise wird Druckluft in Ringkanäle mit niedrigerem Druckniveau recycelt.

Figur 3 zeigt typische Schaltstellungen der einzelnen Ventile. Hierbei erkennt man, dass die Kunststoffvorformlinge zunächst mit einem Druck P1 beaufschlagt werden. Als nächsthöhere Druckstufe folgt Pi. Zu diesem Zweck wird eine erfindungsgemäße Ventileinrichtung geschaltet bzw. geöffnet, wie durch das Bezugszeichen S1 veranschaulicht. Dieses Schalten S1 erfolgt dabei aktiv, das heißt insbesondere angetrieben. Zu einem späteren Zeitpunkt wird das Ventil wieder geschlossen, wobei dieses Schalten S2 mit der erfindungsgemäßen Ventileinrichtung passiv erfolgt, das heißt bewirkt durch die Druckverhältnisse, die beim aktiven Schalten des Pi+-Ventils entstehen. Dieser passive Schaltvorgang S2 des Pi-Ventils erfolgt zeitlich verzögert zum aktiven Schaltvorgang des Pi+-Ventils. Daraus ergibt sich eine Zeitverzögerung t1, bei der zeitgleich das Pi und Pi+ Ventil zumindest teilweise geöffnet sind. Diese Schaltlogik kann vorzugsweise bei allen Schaltstufen beim Druckaufbau angewandt werden.

An diesen Druck Pi schließt sich ggf. ein Zwischenblasdruck Pi+ an. Anschließend erfolgt mit dem Druck P2 ein Fertigblasen der Kunststoffvorformlinge bzw. der dann schon bestehenden Kunststoffbehältnisse, um diese vollkommen auszubilden.

Im weiteren Verlauf werden die Ventile wieder in der umgekehrten Reihenfolge geschaltet, um so auch Druckluft in andere Ringkanäle zurückzugewinnen. Schließlich wird noch ein Auslassventil EXH geöffnet, um verbleibende Druckluft aus dem System zu entlassen und um anschließend die fertig geformten Kunststoffbehältnisse entnehmen zu können.

Damit kann durch das hier beschriebene Doppelrückschlagventil eine jeweils nächste Druckstufe (die nächsthöhere Druckstufe beim Blasen bzw. die nächst niedrigere beim Recyceln) und damit der nächste Prozesskolben bereits aktiv geschalten werden, ohne den Prozesskolben des vorherigen Prozessventils aktiv schalten zu müssen. Ein Rückschlagkolben kann eigenständig verschließen, wie oben beschrieben. Bei einer Umkehrung des Druckverhältnisses kann dies auch im Prozessventil erfolgen. Auf diese Weise kann, wie durch das Bezugszeichen S2 bzw. S4 angedeutet, je ein aktiver Schaltvorgang eingespart werden.

Auf diese Weise kann in beide Richtungen eine deutlich steilere Druckkurve erreicht werden. Durch diese wird die Qualität des Behältnisses erhöht, weil die in Figur 2 sichtbaren Plateauphasen weitgehend verschwinden. Durch die Integration der Rückschlagfunktion in dem Prozesskolben bzw. Ventilkolben wird für beide Durchflussrichtungen nur ein Rückschlagkolben benötigt.

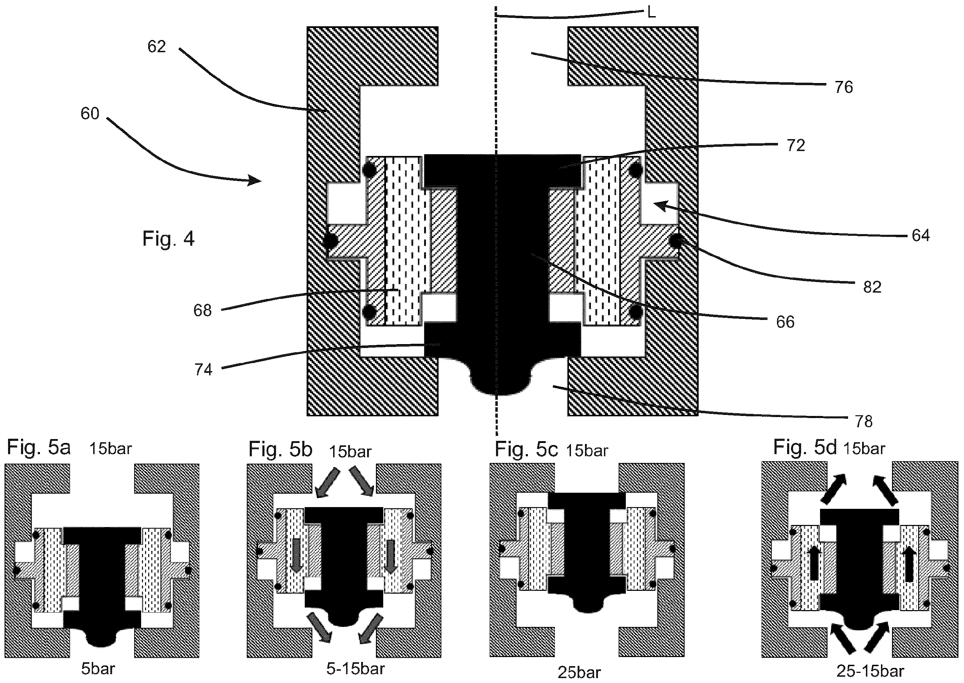

Figur 4 zeigt eine schematische Darstellung einer erfindungsgemäßen Ventileinrichtung. Diese weist ein Ventilgehäuse 62 auf, innerhalb dessen ein Ventilkolben 64 hier in der vertikalen Richtung bzw. einer Längsrichtung L des Ventilgehäuses, welche sich zwischen zwei Öffnungen 76 und 78 erstreckt, über welche das fließfähige Medium strömt, zwischen zwei Positionen bewegbar ist.

Mittels einer Dichtungseinrichtung wird wie etwa einer Kolbendichtung 82 ist der Ventilkolben 64 gegenüber dem Ventilgehäuse 62 abgedichtet. Damit wird der Ventilkolben 64 auch durch das Ventilgehäuse 62 geführt. Das Bezugszeichen 66 kennzeichnet einen Rückschlagkolben, der ebenfalls hier in der vertikalen Richtung L zwischen zwei Stellungen bewegbar ist. Dieser Rückschlagkolben 66 wird durch den Ventilkolben 64 geführt.

Das Bezugszeichen 68 kennzeichnet Leitkanäle, über welche das fließfähige Medium strömen kann.

Der Rückschlagkolben 66 weist zwei Verschließelemente 72 und 74 auf, die jeweils die Rückschlagfunktion bewerkstelligen. Diese können Zugänge 76 und 78 der Ventileinrichtung 60 blockieren. Diese Blockade erfolgt dabei bevorzugt in zwei Endstellungen des Rückschlagkolbens 66.

Die Figuren 5a bis 5d zeigen vier Situationen der dargestellten Ventileinrichtung. Bei der in Figur 5a gezeigten Situation ist der Ventilkolben 64 in einer geschlossenen Stellung. Hier können (beispielsweise) 5 bar in dem Behältnis anliegen und 15 bar in dem versorgenden Ringkanal. Daher ist auch hier der Rückschlagkolben 66 in einer geschlossenen Stellung.

In der in Figur 5b gezeigten Situation wird der Ventilkolben 64 aktiv in die obere Position geschalten. Dies kann unabhängig von den anliegenden Druckverhältnissen erfolgen. Nun ist das Ventil geöffnet und von oben nach unten kann Luft strömen. Das Behältnis wird nun mit dem Druck 15 bar gefüllt.

Bei der in Figur 3 gezeigten Situation wurde ein nachfolgendes Prozessventil geschaltet und damit liegt nunmehr ein höherer Druck von hier 25 bar an der Ventileinrichtung 60 an. Dies bewirkt, dass der Rückschlagkolben 66 in eine geschlossene Position verbracht wird. Damit erfolgt bei der in Figur 5c gezeigten Situation ein automatisches Schließen des Ventils bzw. der Zuflussleitung.

Bei der in Figur 5d gezeigten Situation wird wiederum der Ventilkolben aktiv (zum Öffnen der Ventileinrichtung) geschalten. Der Rückschlagkolben 66 wird hier nach unten mitgenommen und so in eine mittlere Stellung verbracht. Das Ventil ist damit hier in einer geöffneten Stellung.

In einer nächsten Stufe gelangt man wiederum in die Darstellung aus Figur 5a. Der Druck in dem Behältnis sinkt durch das Öffnen eines nachfolgenden Prozessventils (tieferes Druckniveau). Damit wird irgendwann der Druck in dem Behältnis geringer als im Ringkanal und der Rückschlagkolben schließt automatisch in die in Figur 5a gezeigte untere Stellung.

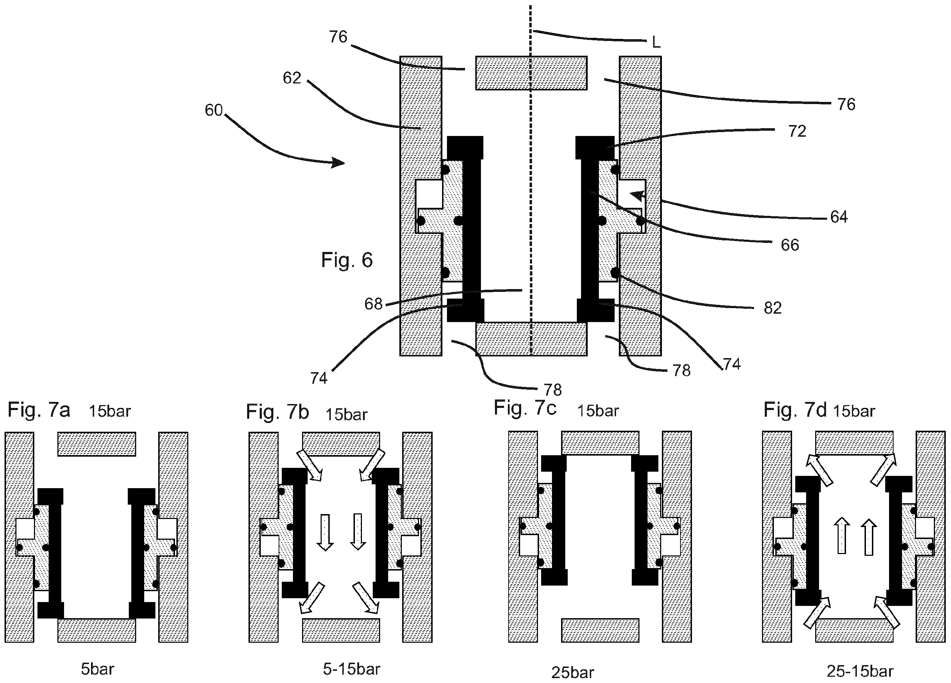

Fig. 6 zeigt eine Ventileinrichtung ein einer weiteren erfindungsgemäßen Ausgestaltung. Bei dieser Ausgestaltung ist der Rückschlagkolben 66 als rohrförmiger Körper ausgebildet, der in seinem Inneren den Leitkanal 68 ausbildet.

Die Verschließelemente 74 und 72 sind hier an den Umfangswandungen dieses rohrförmigen Körpers ausgebildet. Das Ventilgehäuse 62 weist zwei ringförmige Zugangsöffnungen 76 und 78 auf.

Die Fig. 7a - 7d zeigen wiederum Schaltstellungen der in Fig. 6 gezeigten Ventileinrichtung.

Diese entsprechen den Schaltstellungen aus den Fig. 5a - 5d so dass auf die obige Beschreibung verwiesen wird.

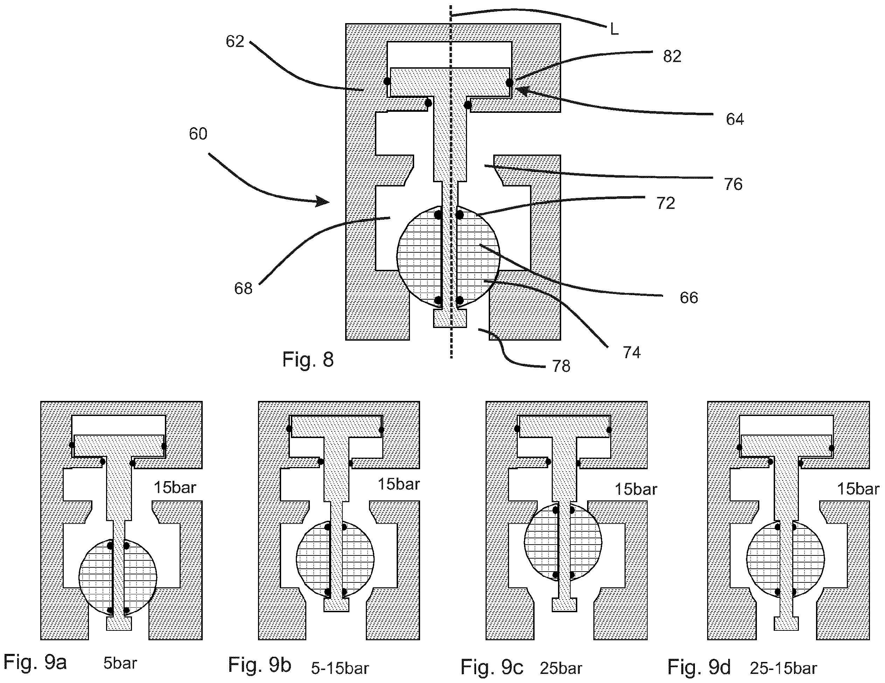

Fig. 8 zeigt eine Ventileinrichtung in einer weiteren erfindungsgemäßen Ausgestaltung. Bei dieser Ausgestaltung ist der Rückschlagkolben 66 als kugelförmiger Körper ausgebildet, wobei die Oberfläche dieses kugelförmigen Körpers sowohl die Verschließelemente 72 als auch die Verschließelemente 74 ausbildet. Diese Verschließelemente können wiederum die Zugänge 76 und 78, welche hier einen Ventilsitz ausbildeten, verschließen.

Der Ventilkolben 64 ist hier in einem separaten Ventilraum untergebracht.

Die Fig. 9a - 9d zeigen wiederum Schaltstellungen der in Fig. 8 gezeigten Ventileinrichtung. Diese entsprechen den Schaltstellungen aus den Fig. 5a - 5d so dass auf die obige Beschreibung verwiesen wird.

### Bezugszeichenliste

- 1: Umformungseinrichtung
- 2: Umformungsstationen
- 4: Blasformanordnung
- 8: Beaufschlagungseinrichtung
- 6: Ventilanordnung
- 10: Kunststoffvorformlinge
- 12: drehbarer Träger
- 32: Transporteinrichtung
- 50: Heizeinrichtung
- 52: Heizelemente
- 54: Transporteinrichtung
- 60: Ventileinrichtungen
- 62: Ventilgehäuse
- 64: Ventilkolben
- 66: Rückschlagkolben
- 68: Leitkanäle
- 72: Verschließelement
- 74: Verschließelement
- 76: Zugang der Ventileinrichtung
- 78: Zugang der Ventileinrichtung
- 82: Dichtungseinrichtung
- EXH: Auslassventil
- P1: Druck
- P2: Druck
- Pi: Zwischenblasdruck
- Pi+: weiterer Zwischenblasdruck
- S1: aktives Schalten der Ventileinrichtung beim Druckaufbau
- S2: passives Schalten des Rückschlagkolbens beim Druckaufbau
- S3: aktives Schalten der Ventileinrichtung beim Recyceln
- S4: passives Schalten des Rückschlagkolbens beim Recyceln

## Patentansprüche

1. Vorrichtung zum Umformen von Kunststoffvorformlingen (10) zu Kunststoffbehältnissen (20) mit wenigstens einer Umformungsstation (2), welche eine Blasformanordnung (4) aufweist, innerhalb derer Kunststoffvorformlinge durch Beaufschlagung mit einem fließfähigen Medium zu Kunststoffbehältnissen umformbar sind und mit einer Beaufschlagungseinrichtung (8), welche dazu geeignet und bestimmt ist, die Kunststoffvorformlinge mit dem fließfähigen Medium zu beaufschlagen, und mit einer Ventilanordnung (6) mit wenigstens zwei Ventileinrichtungen (60) , welche dazu geeignet und bestimmt ist, dem Kunststoffvorformling während dessen Umformung das fließfähige Medium unter wenigstens zwei unterschiedlichen Drücken (p1, p2) zuzuführen,
**dadurch gekennzeichnet, dass**
wenigstens eine Ventileinrichtung (60) wenigstens einen bezüglich eines Ventilgehäuses (62) zwischen zwei Ventilstellungen bewegbaren Ventilkolben (64) aufweist und an diesem Ventilkolben mindestens ein zwischen wenigstens zwei Stellungen bewegbares Rückschlagelement (66) angeordnet ist.

2. Vorrichtung (1) nach Anspruch 1,
**dadurch gekennzeichnet, dass**
die Vorrichtung ein Druckreservoir aufweist, welche das fließfähige Medium bereitstellt und die Ventileinrichtung (60) zwischen diesem Druckreservoir und der Beaufschlagungseinrichtung (8) angeordnet ist.

3. Vorrichtung (1) nach wenigstens einem der vorangegangenen Ansprüche,
**dadurch gekennzeichnet, dass**
der erste Ventilkolben (64) aktiv schaltbar ist.

4. Vorrichtung (1) nach wenigstens einem der vorangegangenen Ansprüche,
**dadurch gekennzeichnet, dass**
die Ventileinrichtung für beide Strömungsrichtungen des fließfähigen Mediums eine Rückschlagventil - Funktion ausbilden kann.

5. Ventileinrichtung (60) für eine Vorrichtung nach wenigstens einem der vorangegangenen Ansprüche,
**dadurch gekennzeichnet, dass**
die Ventileinrichtung (60) wenigstens einen bezüglich eines Ventilgehäuses (62) zwischen zwei Ventilkolbenstellungen bewegbaren Ventilkolben (64) aufweist und an diesem Ventilkolben ein zwischen wenigstens zwei Stellungen bewegbares Rückschlagelement (66) angeordnet ist wobei in einer Ventilstellung des Ventilkolbens (64) und des Rückschlagelements (66), die Ventileinrichtung (60) in der einen Strömungsrichtung sperrt und in einer Ventilstellung des Ventilkolbens und des Rückschlagelements (66), das Ventil in der anderen Strömungsrichtung sperrt.

6. Ventileinrichtung (60) nach dem vorangegangenen Anspruch,
**dadurch gekennzeichnet, dass**
die Ventileinrichtung einen Strömungskanal zum Leiten des fließfähigen Mediums aufweist, wobei dieser Strömungskanal zwischen dem Rückschlagelement (66) und der Gehäusewandung und/oder durch das Rückschlagelement (66) verläuft.

7. Ventileinrichtung (60) nach wenigstens einem der vorangegangenen Ansprüche,
**dadurch gekennzeichnet, dass**
das Rückschlagelement ein erstes Verschließelement (72) aufweist, welches dazu geeignet und bestimmt ist, eine Strömung des fließfähigen Mediums in einer ersten Strömungsrichtung zu blockieren und ein zweites Verschließelement (74), welches dazu geeignet und bestimmt ist, eine Strömung des fließfähigen Mediums in der zweiten Strömungsrichtung zu blockieren.

8. Ventileinrichtung (60) nach wenigstens einem der vorangegangenen Ansprüche,
**dadurch gekennzeichnet, dass**
der Rückschlagelement (66) in wenigstens drei Stellungen gegenüber dem Ventilgehäuse (62) positionierbar ist.

9. Verfahren zum Umformen von Kunststoffvorformlingen zu Kunststoffbehältnissen (20) wobei die Kunststoffvorformlinge mittels einer Beaufschlagungseinrichtung (8) durch Beaufschlagung mit einem fließfähigen Medium zu Kunststoffbehältnissen umgeformt werden, wobei den Kunststoffvorformlingen mittels wenigstens zwei Ventileinrichtungen (60) das fließfähige Medium unter wenigstens zwei unterschiedlichen Drücken zugeführt wird,
**dadurch gekennzeichnet, dass**
wenigstens eine Ventileinrichtung (60) wenigstens einen Ventilkolben (64) aufweist, der bezüglich eines Ventilgehäuses (62) zwischen zwei Ventilstellungen bewegt wird und mindestens ein an diesem Ventilkolben angeordnetes Rückschlagelement das bezüglich des Ventilkolbens zwischen wenigstens zwei Stellungen bewegt wird.

10. Verfahren nach Anspruch 9,
**dadurch gekennzeichnet, dass**
die Ventileinrichtung (60) wenigstens zeitweise den Durchfluss des fließfähigen Mediums in einer ersten Strömungsrichtung sperrt und die Ventileinrichtung wenigstens zeitweise den Durchfluss des fließfähigen Mediums in einer zweiten Strömungsrichtung sperrt.

## Claims

1. Machine for reshaping plastic preforms (10) into plastic containers (20) with at least one reshaping station (2), which has a blow moulding arrangement (4) inside which plastic preforms can be reshaped into plastic containers by application of a flowable medium, and with an application device (8) which is suitable and intended for applying a flowable medium to the plastic preforms, and with a valve arrangement (6) with at least two valve devices (60) which is suitable and intended for feeding the flowable medium under at least two different pressures (p1, p2) to the plastic preform during the reshaping thereof,
**characterised in that**
at least one valve device (60) has at least one valve piston (64) which is movable with respect to a valve housing (62) between two valve positions, and a check element (66) which is movable between at least two positions is arranged on this valve piston.

2. Machine (1) according to claim 1,
**characterised in that**
the machine has a pressure reservoir which provides the flowable medium and the valve device (60) is arranged between this pressure reservoir and the application device (8).

3. Machine (1) according to at least one of the preceding claims, **characterised in that**
the first valve piston (64) can be switched actively.

4. Machine (1) according to at least one of the preceding claims, **characterised in that**
the valve device can perform a check valve function for both flow directions of the flowable medium.

5. Valve device (60) for a machine according to at least one of the preceding claims,
**characterised in that**
the valve device (60) has at least one valve piston (64) which is movable with respect to a valve housing (62) between two valve positions, and a check element (66) which is movable between at least two positions is arranged on this valve piston, wherein in a valve position of the valve piston (64) and of the check piston (66) the valve device (60) is closed in one flow direction, and in a valve position of the valve piston and of the check piston (66) the valve is closed in the other flow direction.

6. Valve device (60) according to the preceding claim,
**characterised in that**
the valve device has a flow channel for directing the flowable medium, wherein this flow channel extends between the check element (66) and the housing wall and/or extends through the check element (66).

7. Valve device (60) according to at least one of the preceding claims, **characterised in that**
the check element has a first closure element (72) which is suitable and intended for blocking a flow of the flowable medium in a first flow direction and a second closure element (74) which is suitable and intended for blocking a flow of the flowable medium in the second flow direction.

8. Valve device (60) according to at least one of the preceding claims, **characterised in that**
the check element (66) can be positioned in at least three positions relative to the valve housing (62).

9. Method for reshaping plastic preforms into plastic containers (20), wherein the plastic preforms are reshaped into plastic containers by means of an application device (8) by application of a flowable medium, wherein the flowable medium is fed under at least two different pressures to the plastic preforms by means of at least two valve devices (60), **characterised in that**
at least one valve device (60) has at least one valve piston (64) which is moved with respect to a valve housing (62) between two valve positions, and at least one check element which is arranged on this valve piston and is moved between at least two positions.

10. Method according to claim 9,
**characterised in that**
the valve device (60) shuts off, at least at times, the flow of the flowable medium in a first flow direction, and the valve device shuts off, at least at times, the flow of the flowable medium in a second flow direction.

## Revendications

1. Dispositif pour façonner des préformes en plastique (10) en récipients en plastique (20) avec au moins une station de façonnage (2), laquelle présente un ensemble de moulage par soufflage (4), à l'intérieur duquel des préformes en plastique peuvent être façonnées en récipients en plastique par sollicitation avec un milieu coulant et avec un système de sollicitation (8), lequel est adapté et destiné à solliciter les préformes en plastique avec le milieu coulant, et avec un ensemble de soupape (6) avec au moins deux systèmes de soupape (60), lequel est adapté et destiné à amener le milieu coulant à la préforme en plastique pendant le façonnage de celle-ci sous au moins deux pressions (p1, p2) différentes, **caractérisé en ce que**
au moins un système de soupape (60) présente au moins un piston de soupape (64) mobile par rapport à un carter de soupape (62) entre deux positions de soupape et au moins un élément anti-retour (66) mobile entre au moins deux positions est disposé sur ce piston de soupape.

2. Dispositif (1) selon la revendication 1,
**caractérisé en ce que**
le dispositif présente un réservoir de pression, lequel fournit le milieu coulant et le système de soupape (60) est disposé entre ce réservoir de pression et le système de sollicitation (8).

3. Dispositif (1) selon au moins l'une des revendications précédentes, **caractérisé en ce que**
la première tige de soupape (64) peut être commutée de façon active.

4. Dispositif (1) selon au moins l'une des revendications précédentes, **caractérisé en ce que**
le système de soupape pour les deux directions d'écoulement du milieu coulant peut réaliser une fonction de clapet antiretour.

5. Système de soupape (60) pour un dispositif selon au moins l'une des revendications précédentes,
**caractérisé en ce que**
le système de soupape (60) présente au moins un piston de soupape (64) mobile par rapport à un carter de soupape (62) entre deux positions de piston de soupape et un élément antiretour (66) mobile entre au moins deux positions est disposé sur ce piston de soupape, dans lequel dans une position de soupape du piston de soupape (64) et de l'élément antiretour (66), le système de soupape (60) arrête la soupape dans une des directions d'écoulement et dans une position de soupape du piston de soupape et de l'élément antiretour (66), arrête la soupape dans l'autre direction d'écoulement.

6. Système de soupape (60) selon la revendication précédente, **caractérisé en ce que**
le système de soupape présente un canal d'écoulement pour guider le milieu coulant, dans lequel ce canal d'écoulement s'étend entre l'élément antiretour (66) et la paroi de carter et/ou à travers l'élément antiretour (66).

7. Système de soupape (60) selon au moins l'une des revendications précédentes,
**caractérisé en ce que**
l'élément antiretour présente un premier élément de fermeture (72), lequel est adapté et destiné à bloquer un écoulement du milieu coulant dans une première direction d'écoulement et un deuxième élément de fermeture (74), lequel est adapté et destiné à bloquer un écoulement du milieu coulant dans la deuxième direction d'écoulement.

8. Système de soupape (60) selon au moins l'une des revendications précédentes,
**caractérisé en ce que**
l'élément antiretour (66) peut être positionné dans au moins trois positions par rapport au carter de soupape (62).

9. Procédé pour façonner des préformes en plastique en récipients en plastique (20), dans lequel les préformes en plastique sont façonnées en récipients en plastique au moyen d'un système de sollicitation (8) par sollicitation avec un milieu coulant, dans lequel le milieu coulant est amené aux préformes en plastique sous au moins deux pressions différentes au moyen d'au moins deux systèmes de sollicitation (60), **caractérisé en ce que**
au moins un système de soupape (60) présente au moins un piston de soupape (64), qui est déplacé par rapport à un carter de soupape (62) entre deux positions de soupape et au moins un élément anti-retour disposé sur ce piston de soupape, qui est déplacé par rapport au piston de soupape entre au moins deux positions.

10. Procédé selon la revendication 9,
**caractérisé en ce que**
le système de soupape (60) arrête au moins temporairement le débit du milieu coulant dans une première direction d'écoulement et le système de soupape arrête au moins temporairement le débit du milieu coulant dans une deuxième direction d'écoulement.
